# FASCICULE DE BREVET EUROPEEN

(11) **EP 1 854 761 B1**
(45) Date de publication et mention de la délivrance du brevet: **06.09.2017**
(21) Numéro de dépôt: 07290468.3
(22) Date de dépôt: 17.04.2007
(51) Int. Cl.: C01B 3/38, F02C 7/08, F02C 6/18, F02C 6/00, F02C 3/22, F23C 9/00

(54) **PROCÉDÉ DE PRODUCTION D'ÉLECTRICITÉ ET D'UN GAZ RICHE EN HYDROGÈNE PAR VAPORÉFORMAGE D'UNE COUPE HYDROCARBURE AVEC APPORT DE CALORIES PAR COMBUSTION À L'HYDROGÈNE IN SITU**
VERFAHREN ZUR ERZEUGUNG VON STROM UND EINES WASSERSTOFFREICHEN GASES DURCH DAMPFREFORMIERUNG EINER KOHLENWASSERSTOFFFRAKTION MIT KALORIENZUFUHR DURCH VERBRENNUNG VON WASSERSTOFF IN SITU
METHOD OF PRODUCING ELECTRICITY AND A HYDROGEN-RICH GAS BY STEAM REFORMING A HYDROCARBON FRACTION WITH CALORIE INPUT BY IN SITU HYDROGEN COMBUSTION

(30) Priorité: 09.05.2006 FR 0604175
(43) Date de publication de la demande: 14.11.2007
(73) Titulaire: IFP Énergies nouvelles, 92852 Rueil-Malmaison Cedex (FR)
(72) Inventeur: Fischer, Béatrice, 69005 Lyon (FR); Giroudiere, Fabrice, 69530 Orlienas (FR); Arnaud, Anthony, 69005 Lyon (FR)

(56) Documents cités:
- EP-A- 1 382 568
- EP-A- 1 505 036
- EP-A2- 0 814 146
- EP-A2- 1 122 805
- WO-A-02/102708
- WO-A-03/028876
- FR-A1- 2 852 358
- US-A- 5 669 216
- US-A- 5 896 738
- US-A1- 2004 029 057

## Description

### DOMAINE DE L'INVENTION

L'invention se situe dans le domaine des procédés de production d'un gaz riche en hydrogène, et de coproduction d'énergie électrique via une turbine à gaz et sans production de CO2 autre que le CO2 faisant partie de l'effluent du procédé.
Les turbines à gaz sont des installations de production d'électricité généralement bon marché par rapport aux centrales nucléaires ou aux centrales à charbon, assez simples et rapides à construire. Elles présentent des avantages d'un point de vue maintenance et opération, et elles constituent une source d'énergie plus "propre" (notamment en raison de l'absence de soufre dans le combustible), la principale difficulté à résoudre étant celle des émissions de dioxyde de carbone.
Face à la problématique de la réduction des rejets de CO2, deux solutions sont envisageables : la première solution est de capturer le CO2 en lavant les fumées sortant de la turbine et en en capturant le CO2, mais cette solution est difficile et relativement peu efficace du fait de la trop basse pression de capture.
La seconde solution est d'utiliser un combustible dont la combustion ne génère pas de CO2, c'est à dire un combustible contenant essentiellement de l'hydrogène. Cette solution a été envisagée dans le procédé décrit dans la demande de brevet FR-A1-2 852 358, dans lequel la production d'hydrogène par vaporéformage d'une charge hydrocarbonée est utilisée en partie pour assurer l'apport de chaleur nécessaire au fonctionnement de la turbine. L'apport de calories nécessaire au vaporéformage se fait dans ce concept par échange de chaleur indirect entre les fumées chaudes de la turbine et la charge de vaporéformage à l'intérieur d'un réacteur- échangeur.
La présente invention s'inscrit également dans le domaine de la génération d'hydrogène.
Le gaz riche en hydrogène produit par le réacteur de vaporéformage est généralement appelé gaz de synthèse par l'homme du métier. Il est constitué essentiellement d'un mélange d'hydrogène (H2) et de dioxyde de carbone (CO2) dans des proportions typiques de 65% à 75% molaire d'hydrogène (en base sèche) et de 6% à 10% molaire de CO2 , et peut contenir en outre du monoxyde de carbone (CO) dans une proportion pouvant aller de 7 % à 16 % molaire.
Généralement, à l'issue du réacteur de vaporéformage, ledit gaz de synthèse est introduit successivement dans deux réacteurs de conversion du CO ("water gas shift - reactor" ou W.G.S. reactor selon la terminologie anglo-saxonne), un premier réacteur dit "haute température", suivi d'un second réacteur dit "basse température", permettant d'effectuer une conversion du CO en CO2 en présence d'eau et d'augmenter la production d'hydrogène.

En sortie du ou des réacteurs de conversion du CO, la teneur en CO du gaz de synthèse est abaissée à une teneur comprise entre 2% et 3% molaire à l'issue du premier réacteur, et abaissée à une teneur comprise entre 0,1% et 0,3% molaire à l'issue du second réacteur.

La présente invention consiste à réaliser une combustion à l'hydrogène à l'intérieur même du réacteur- échangeur de vaporéformage, de manière à limiter les débits de fumées nécessaires, et à améliorer l'efficacité des transferts thermiques vers la zone réactionnelle. Cependant, la combustion à l'hydrogène posant des problèmes de sécurité, un recyclage au moins partiel des effluents de combustion devient alors indispensable. Ce recyclage permet de travailler en atmosphère quasiment inerte.

### ART ANTERIEUR:

Parmi les documents de l'art antérieur, le brevet FR 2 852358 décrit un procédé de cogénération par turbine dans lequel une partie des gaz chauds issus de la combustion sous pression associé à la turbine est utilisée comme apport de calories dans un procédé faisant appel à un échange de chaleur ou une réaction chimique à caractère endothermique. Cet apport de calorie peut ainsi être réalisé par échange indirect entre les fumées chaudes et le fluide de vaporéformage, à l'intérieur d'un réacteur de vaporeformage. Le procédé décrit dans ce brevet n'enseigne pas la manière de contrôler la combustion à l'hydrogène permettant d'apporter les calories nécessaires à la réaction de vaporéformage. De plus, ledit apport de calories n'est pas effectué in situ, mais dans une cellule de postcombustion située en amont du réacteur de vaporéformage.

La présente invention consiste à réaliser une combustion à l'intérieur du réacteur-échangeur de vaporéformage, de manière à limiter les débits de fumées nécessaires, ou d'augmenter la production d'hydrogène pour la même turbine. Cependant, la combustion à l'hydrogène posant des problèmes de sécurité à cause de la température et de la vitesse très élevée de combustion de l'hydrogène, un recyclage, au moins partiel, des effluents de combustion permettant de travailler en atmosphère quasiment inerte est alors nécessaire. Ce recyclage fait l'objet d'un circuit particulier qui est décrit dans la présente invention.

Dans le cadre de la présente invention, une partie de la vapeur d'eau générée par le cycle combiné est utilisée en mélange avec la charge de vaporéformage pour effectuer la réaction de vaporéformage et générer l'hydrogène.

### DESCRIPTION SOMMAIRE DES FIGURES

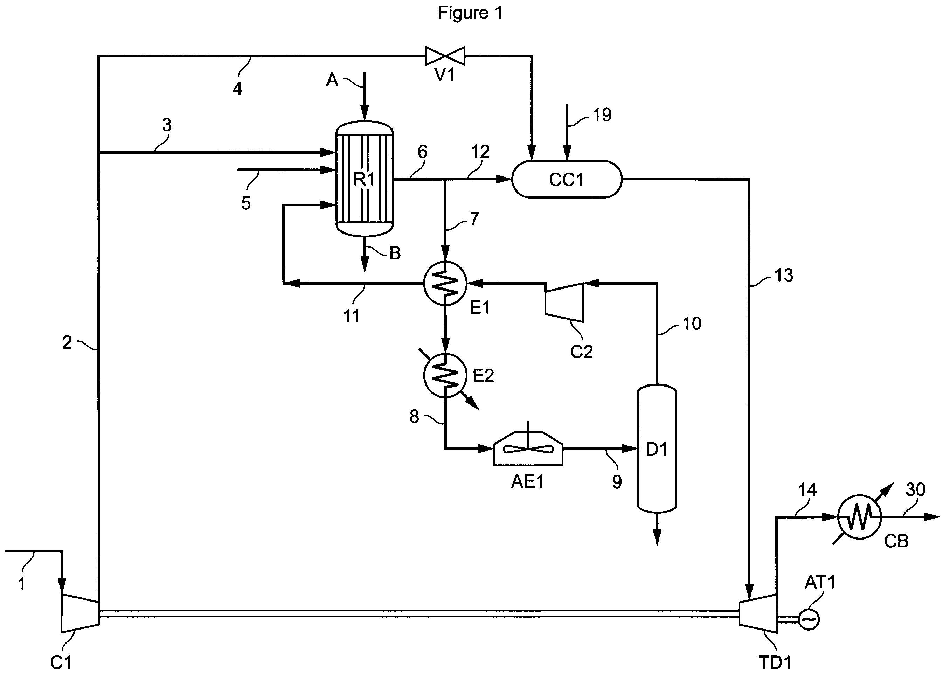

La figure 1 est une représentation du schéma de base du procédé selon l'art antérieur dans lequel le circuit de l'effluent de combustion ne comprend qu'une phase de recompression destinée à compenser les pertes de charge dudit circuit.

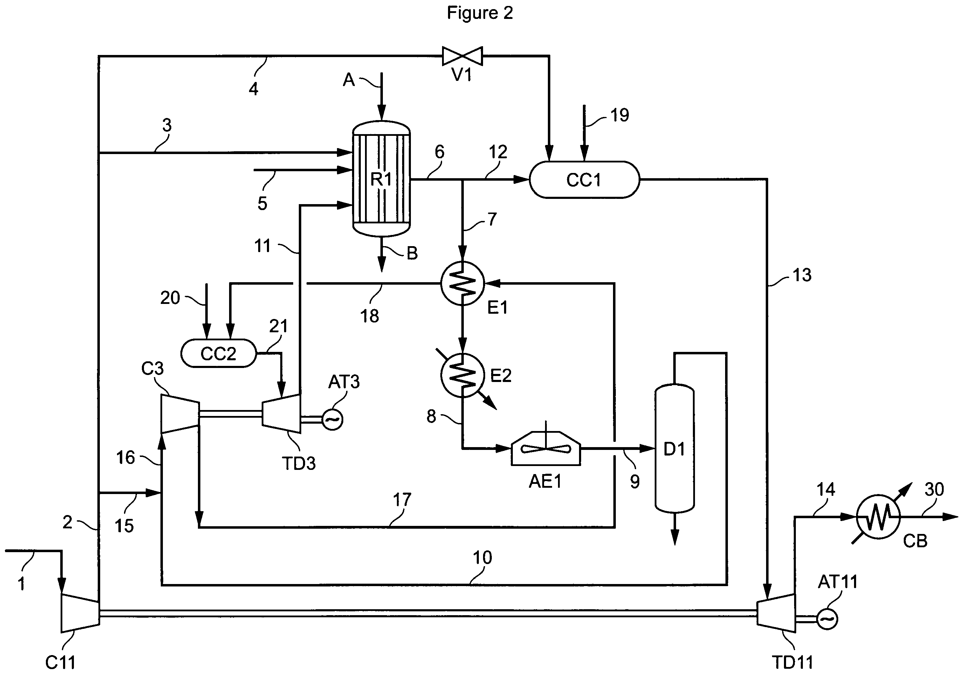

La figure 2 est une représentation du schéma de procédé selon l'invention dans une première variante dans laquelle le circuit de l'effluent de combustion comprend une phase de recompression, et au moins une phase de réchauffement par combustion à l'hydrogène, ladite phase de réchauffement étant ou non suivie d'une phase de détente. La compression de l'air se fait jusqu'à une pression plus basse que pour le schéma de base.

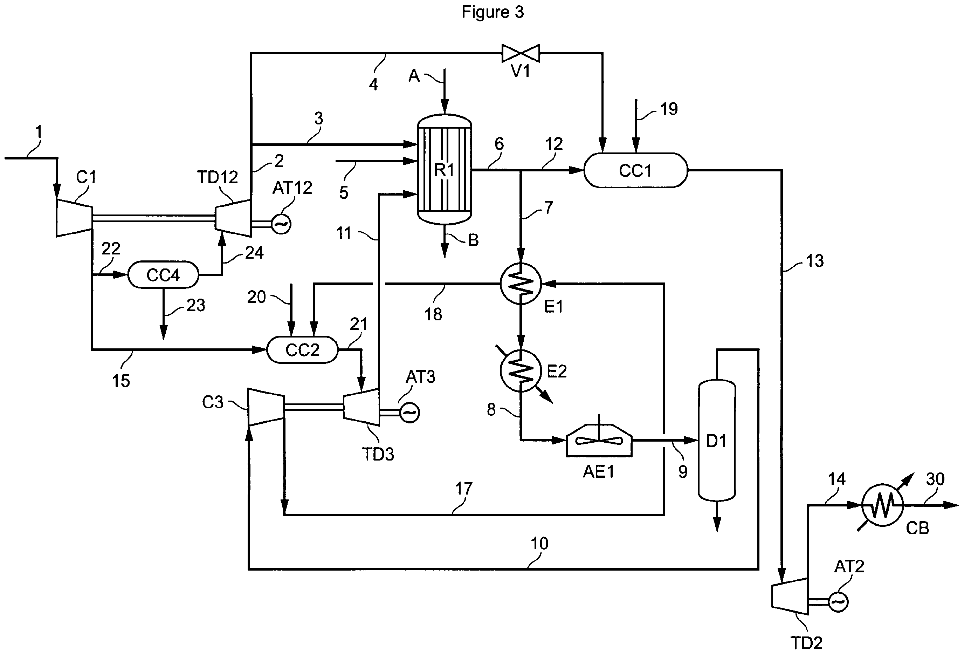

La figure 3 est une représentation du schéma de procédé selon l'invention dans une seconde variante dans laquelle le circuit d'azote comprend une phase de recompression, et au moins une phase de réchauffement par combustion à l'hydrogène avec un apport d'air directement issu du compresseur de l'air de combustion nécessaire à la réaction de vaporéformage, ladite phase de réchauffement étant ou non suivie d'une phase de détente. La compression de l'air se fait jusqu'au même niveau de pression que celui du schéma de base.

### DESCRIPTION SOMMAIRE DE L'INVENTION

La présente invention peut être définie comme un procédé de production de gaz de synthèse par vaporéformage d'une coupe pétrolière et de coproduction d'énergie électrique, dans lequel l'apport des calories nécessaires à la réaction de vaporéformage est réalisé par une combustion à l'hydrogène dilué réalisée à l'intérieur du réacteur-échangeur de vaporéformage, la dite combustion étant contrôlée par le recyclage d'une partie de l'effluent de ladite combustion qui joue le rôle de gaz de dilution de l'hydrogène nécessaire à la combustion.

La présente invention concerne plus particulièrement le mode d'apport des calories nécessaires à la réaction endothermique de vaporéformage, qui est réalisé au moyen d'une combustion à l'hydrogène dilué à l'intérieur même du réacteur de vaporéformage, et qui est appelée dans la suite "combustion in situ".

L'apport de calories nécessité par la réaction de vaporéformage est réalisé dans le cadre de la présente invention au moyen de la combustion d'hydrogène dilué dans un gaz inerte, majoritairement constitué d'azote, et appelé effluent de combustion, ou quelquefois gaz de dilution. Ledit effluent de combustion (ou ledit gaz de dilution) fait l'objet d'un circuit particulier qui est décrit en détail ci -après. Les calories sont transférées au circuit de vaporéformage par échange indirect avec le circuit de dilution à l'intérieur même du réacteur. Dans la suite du texte on parlera de réacteur-échangeur pour désigner le réacteur de vaporéformage.

Le procédé selon l'invention permet également de coproduire de l'énergie, par exemple électrique, d'une part à l'aide de l'effluent à haute température qui est envoyé dans la chambre de combustion puis dans une turbine de détente, d'autre part en générant de la vapeur d'eau à moyenne pression en divers points du procédé situés en aval du réacteur-échangeur.

De manière générale, et c'est un des aspects de l'invention, le procédé réalise un haut degré d'intégration thermique en disposant d'échangeurs charge/effluent ou effluent/effluent permettant de récupérer des calories à différents niveaux de température.

Un autre aspect important du procédé selon l'invention est qu'il ne s'accompagne d'aucune production de CO2 autre que celle correspondant au gaz de synthèse lui même. La capture de CO2 contenu dans le gaz de synthèse peut être réalisée avec des procédés usuels, étant donné que cette production de CO2 se fait à haute pression.

Le procédé de production de gaz de synthèse selon l'invention peut donc être défini comme un procédé par vaporéformage d'une charge hydrocarbure (A) dans un réacteur de vaporeformage (R1), et de coproduction d'énergie électrique, dans lequel l'apport de calories nécessité par la réaction de vaporéformage est obtenu par une combustion à l'hydrogène (3) dilué par une partie des effluents de combustion (11), ladite combustion étant réalisée à l'intérieur du réacteur- échangeur (R1), l'air nécessaire à la dite combustion (1) est comprimé à une pression comprise entre 0,4 et 4 MPa absolus au moyen du compresseur (C1), et l'effluent résultant de ladite combustion (6) constituant le circuit de dilution, est pour une partie (7 devenant 11) recyclé à l'entrée dudit réacteur-échangeur de manière à diluer l'hydrogène (3) et à limiter la teneur en oxygène dans le réacteur-échangeur (R1) à une valeur inférieure à 10 % molaire, l'autre partie (12) de l'effluent de combustion étant introduite dans une chambre de post combustion (CC1), le flux résultant (13) de la combustion à l'hydrogène (19) dans la chambre de postcombustion (CC1) est détendu dans une turbine (TD11 ou TD2) qui fournit en partie l'énergie nécessaire au compresseur (C1), et qui entraîne un alternateur (AT11 ou AT2) assurant la coproduction d'énergie électrique.

Un des avantages du point de vue énergétique du procédé de production de gaz de synthèse selon l'invention, est qu'il permet de réintroduire l'effluent de combustion (11) dans le réacteur échangeur (R1) à une température aussi proche que possible de celle de sortie de l'effluent (6). Par l'expression "aussi proche que possible" on entend que l'écart entre les températures des effluents (6) et (11) est inférieur à 10°C, préférentiellement inférieur à 5°C, et de manière très préférée inférieur à 1 °C.

Enfin le procédé de vaporéformage selon l'invention ne génère dans son circuit de combustion aucun rejet de CO2.

### DESCRIPTION DETAILLEE DE L'INVENTION:

Dans le cadre de la présente invention, la production de gaz de synthèse est obtenue par vaporéformage d'une coupe hydrocarbonée caractérisée en général par son nombre moyen d'atome de carbone, ou son intervalle de distillation.

La coupe hydrocarbonée constituant la charge du procédé est de préférence une coupe constituée d'hydrocarbures avec un nombre d'atomes de carbone pouvant aller de 1 à 20. En particulier, la charge peut, de manière préférée, être une coupe naphta d'intervalle de distillation compris entre 70°C et 250°C, ou du gaz naturel. Cette coupe peut également éventuellement comprendre en proportion variable des alcools, tels que le méthanol ou l'éthanol, ou des alcools plus lourds.
Pour la bonne compréhension de la description qui suit, il convient de bien distinguer l'effluent de combustion utilisé pour apporter les calories nécessaires à la réaction endothermique de vaporéformage, de l'effluent du procédé de vaporéformage lui même qui est un mélange de CO, CO2 et H2 constituant le gaz de synthèse.
La combustion in situ, c'est à dire à l'intérieur du réacteur échangeur, est réalisée au moyen d'hydrogène dilué et d'air de combustion comprimé et produit un effluent de combustion contenant essentiellement de la vapeur d'eau et de l'azote de dilution.

La présente invention porte sur le circuit de l'effluent de la combustion nécessaire à l'apport de calories, qu'on appellera aussi: circuit de l'effluent de combustion, ou quelquefois: circuit de dilution à l'azote, car il est majoritairement constitué d'azote.
Le circuit de recyclage de l'effluent de combustion comprend au moins une phase d'échange de chaleur et une phase de recompression. Quelle que soit la technologie du réacteur-échangeur, celui-ci comprend un circuit de combustion alimenté par de l'air (comburant), de l'hydrogène (combustible), et le recyclage d'une partie de l'effluent de combustion, la combustion dans le réacteur-échangeur à partir de ces 3 flux générant ledit effluent de combustion.
Cet effluent de combustion est séparé en au moins deux flux, un premier flux constituant le circuit de l'effluent de combustion qui est le plus important, et qui est recyclé en amont du réacteur- échangeur en permettant de limiter la teneur en oxygène en entrée dudit réacteur-échangeur, et un second flux qui est dirigé vers une chambre de post combustion placée en aval du réacteur- échangeur.
Le circuit de l'effluent de combustion selon l'invention, qui peut présenter des variantes selon le niveau de pression et de température dudit effluent de combustion à l'entrée du réacteur-échangeur, est décrit en détail ci-après.
Le combustible, essentiellement de l'hydrogène provenant au moins en partie, et éventuellement en intégralité, de la réaction de vaporéformage, est introduit dans le réacteur-échangeur à la même pression que celle de l'air de combustion et que celle de l'effluent de combustion, aux pertes de charge près du circuit dudit effluent de combustion, et à un niveau de température le plus élevé possible. Le combustible peut être introduit séparément ou en mélange avec l'effluent de combustion. Il peut être introduit en un ou plusieurs points du réacteur- échangeur.

La description qui suit présente le schéma de base du procédé ainsi que les deux variantes de manière détaillée. Elle sera mieux comprise en suivant la figure 1 qui représente le schéma de base. Les figures 2 et 3 représentent des variantes qui ne seront décrites que pour la ou les partie(s) les distinguant du schéma de base. Par souci de simplicité, on identifie les numéros des différents flux aux numéros des lignes véhiculant lesdits flux.
Le schéma de base selon la figure 1 correspond à l'existence d'une seule chambre de post combustion (CC1) placée en aval du réacteur-échangeur (R1), qui permet de porter les effluents de la combustion issus dudit réacteur- échangeur à une température comprise entre 1000°C et 1300°C. Ces valeurs de température correspondent à l'état de l'art sur les turbines à gaz. Ce schéma correspond à l'art antérieur et est mentionné ici afin de faciliter la compréhension de la présente invention.

De l'air de combustion (1) est envoyé dans un compresseur (C1) de manière à produire de l'air comprimé (2) à une température comprise entre 180°C et 650°C, et sous une pression comprise entre 0,4 MPa et 4 MPa absolus, préférentiellement comprise entre 1,5 MPa absolus et 2 MPa absolus.
Cet air comprimé (2) est introduit au moins en partie dans le réacteur- échangeur (R1) par la ligne (3). L'air comprimé peut également être introduit dans le réacteur- échangeur (R1) en mélange avec le flux (11).

L'hydrogène nécessaire à la combustion est introduit dans le réacteur- échangeur par la ligne (5) à un niveau de pression identique ou très proche à celui de l'air comprimé (3). L'hydrogène (5) peut être introduit dans le réacteur- échangeur (R1) soit séparément, soit en mélange avec le flux (11). Le débit d'hydrogène (5) est défini par le niveau de température souhaité côté procédé à la sortie du catalyseur de vaporéformage, température généralement de l'ordre de 850°C à 900°C. Généralement, la température de la réaction de vaporéformage est régulée au moyen du débit d'hydrogène (5).

Le débit d'air de combustion (3) est contrôlé pour avoir de préférence moins de 1% molaire d'oxygène, et préférentiellement moins de 0,5% molaire d'oxygène dans les effluents de combustion. Dans la majorité des cas, l'hydrogène (5) provient des effluents du réacteur-échangeur après passage dans des réacteurs de conversion du CO (non représentés sur la figure 2), et après séparation du CO2 et de l'eau contenus dans le dit effluent. Généralement, la quasi totalité du CO2 est capturé dans une unité de captation faisant appel à un solvant d'absorption qui peut être du méthanol (comme dans le procédé connu sous le nom commercial d'IFPEXOL), ou des amines telles que la MEA (méthyl-éthylamine), la DEA (diéthylamine, ou la MDEA (métyl-diéthylamine) additivée.
Le flux (11) contenant essentiellement de l'azote, un peu d'eau non condensée et une mineure partie d'oxygène, est introduit dans le réacteur- échangeur par la ligne (11).
On appelle ce flux (11) effluent de combustion, ou effluent de dilution à l'azote, pour rappeler sa fonction. On entend par mineure partie d'oxygène une proportion généralement inférieure à 1% molaire, et préférentiellement inférieure à 0,5% molaire.

L'effluent de combustion quitte le réacteur-échangeur par la ligne (6) à une température généralement comprise entre 600°C et 1100°C, et préférentiellement comprise entre 700°C et 800°C. Cet effluent de combustion (6) est divisé en au moins une fraction (7) qui alimente le circuit de l'effluent de combustion décrit ci dessous, et une fraction (12) qui est introduite dans une chambre de postcombustion (CC1). La proportion de flux (7) recyclé en amont du réacteur- échangeur (R1) est telle que dans le cas où l'on mélange l'air de combustion avec l'effluent de dilution à l'azote (11), l'on ait généralement moins de 10% molaire d'oxygène, préférentiellement moins de 6% molaire d'oxygène en entrée de réacteur- échangeur côté combustion, pour limiter les températures de combustion de l'hydrogène.

Il existe différents modes d'injection dudit flux (11), à savoir soit séparément tel que représenté sur les figures 2 à 4, soit en mélange avec le flux d'air (3), soit en mélange avec le flux d'hydrogène (5). L'un ou l'autre des flux (5) et (3), ou les deux, peuvent également être introduits en plusieurs points distincts du réacteur- échangeur de manière à créer une certaine dispersion du combustible et/ou du comburant dans le réacteur- échangeur de vaporéformage. La présente invention est parfaitement compatible avec une introduction en un ou plusieurs points des flux (11), (5) et (3).

L'effluent de combustion (7) est refroidi dans un premier échangeur (E1) ayant généralement pour fluide de refroidissement l'effluent de combustion lui même pris à un niveau de température inférieur, puis éventuellement dans un second échangeur (E2) utilisant un fluide de refroidissement qui peut être éventuellement constitué des condensats vaporisés dans E2 en vapeur d'eau basse pression. Le fluide de refroidissement de l'échangeur (E2) peut être également de l'eau qui est ainsi préchauffée avant d'alimenter un cycle combiné (CB) placé en aval de la turbine de détente (TD1) associée au compresseur d'air de combustion (C1). Dans certains cas, le fluide de refroidissement de l'échangeur (E2) peut être la charge du réacteur-échangeur, constituée d'un mélange de la charge hydrocarbonée et de vapeur d'eau (notée A sur la figure 2).

Le refroidissement de l'effluent de combustion (8) est poursuivi dans l'aéro-réfrigérant (AE1), ou dans un échangeur au moyen d'eau de refroidissement, de manière à le refroidir avant l'entrée, via la ligne (9), dans le ballon de séparation (D1) à une température inférieure au point de rosée dudit effluent de combustion à la pression d'entrée dudit ballon (D1). Dans ces conditions, il est possible de récupérer par simple condensation une majeure partie de l'eau contenue dans l'effluent de combustion (9).

En général, la pression au niveau du ballon de séparation (D1) est égale à la pression de sortie du réacteur-échangeur (prise du côté combustion) diminuée des pertes de charges sur le circuit de l'effluent de combustion dues aux échangeurs (E1) et (E2) et à l'aéroréfrigérant (AE1).

L'effluent de combustion (10) ne contenant plus d'eau après le ballon de séparation (D1) est recomprimé dans le compresseur C2, dit compresseur de recycle, à un niveau de pression permettant de retrouver la pression en entrée du réacteur- échangeur (R1), puis est réchauffé dans l'échangeur (E1) et réintroduit dans le réacteur-échangeur (R1) sous la forme du flux (11) à une température généralement située de 0,5°C à 50°C, et préférentiellement située de 1°C à 10°C au dessous de la température de l'effluent (6).

De nombreuses variantes peuvent exister au niveau du circuit de l'effluent de combustion, l'objectif sur le plan de l'économie globale du procédé, étant que l'effluent (11) soit réintroduit dans le réacteur-échangeur (R1) à une température aussi proche que possible de la température de sortie de l'effluent (6).

Les variantes des figures 2 et 3 du présent procédé permettent de réaliser encore mieux cette condition. La partie d'air comprimé (4) n'ayant pas alimenté le réacteur-échangeur (R1) est introduite après un organe déprimogène (V1), dans une chambre de combustion (CC1) qui permet par une combustion avec de l'hydrogène (19), de relever le plus possible le niveau de température du flux (12) à une valeur généralement comprise entre 1000°C et 1300°C. L'organe déprimogène (V1) introduit une perte de charge sur le circuit (4), de manière à équilibrer la pression de la chambre de combustion (CC1) avec celle du flux (12) à la sortie du réacteur-échangeur (R1).

Le flux (12) est essentiellement constitué d'azote et de vapeur d'eau résultant de la combustion de l'hydrogène. Le flux (12) constitué d'une partie des effluents de combustion (6), est introduit dans la chambre de postcombustion (CC1). Le flux résultant (13) de la combustion à l'hydrogène (19) dans la chambre de postcombustion (CC1) est détendu dans une turbine (TD11 ou TD2) qui fournit en partie l'énergie nécessaire au compresseur (C1), et qui peut, dans certain cas, entraîner un alternateur (AT11 ou AT2).

L'effluent détendu (14) se retrouve à une pression proche de la pression atmosphérique. Ce flux (14) peut être utilisé comme fluide caloporteur pour effectuer de la génération de vapeur, telle que représentée sur la figure 1 par l'échangeur (CB), ou bien être utilisé comme fluide caloporteur pour préchauffer la charge du réacteur- échangeur (R1). D'autres utilisations du flux (14) sont possibles et restent dans le cadre du procédé selon la présente invention.

L'hydrogène (5) utilisé pour effectuer les combustions au niveau du réacteur- échangeur (R1), et l'hydrogène (19) de la chambre de post combustion (CC1) sont avantageusement constitués par au moins une partie de l'hydrogène produit comme effluent du réacteur-échangeur (R1).

Les variantes des figures 2 et 3 permettent, par rapport au schéma de base de la figure 1, d'introduire l'effluent de combustion (11) à un niveau de température égal ou supérieur à celui des effluents de combustion (6). Ceci présente un intérêt du point de vue de la consommation en combustible.

Les deux variantes décrites dans la suite du texte sont compatibles avec les différents modes d'introduction de l'air (3), de l'hydrogène (5), et de l'effluent de combustion recyclé (11) dans le réacteur- échangeur (R1). Les figures 3 et 4 montrent une introduction séparée de chacun des ces 3 flux, mais une introduction en mélange des flux (5) et (11) ou des flux (3) et (11) est parfaitement possible .

Dans la première variante selon la figure 2, le compresseur (C11) permet de comprimer l'air à une pression intermédiaire comprise entre 0,3 et 0,8 MPa. Une partie de l'air comprimé (15) est envoyé vers le circuit de gaz inerte. L'effluent de combustion (7) suit le même schéma de refroidissement dans les échangeurs (E1), (E2) et l'aéroréfrigérant (AE1), et le même schéma de séparation de l'eau dans le ballon (D1) que dans le schéma de base de la figure 1. Comme dans la figure 1, le flux (10) est le gaz inerte débarrassé de l'eau condensée dans le ballon séparateur (D1).
Par contre, le flux (16) résultant du mélange des flux (10) et (15) est introduit dans le compresseur (C3) qui permet de remonter de préférence le niveau de pression de 0,3 à 0,8 MPa à typiquement 1,5 à 2,5 MPa. Le flux (17) au refoulement du compresseur (C3) est réchauffé dans l'échangeur (E1) de préférence à une température comprise entre 600°C et 700°C, et de manière très préférée à une température d'environ 680°C, puis est introduit dans une chambre de combustion (CC2) alimentée en combustible par l'hydrogène (20).

Le flux (21) issu de la chambre de combustion (CC2) est de préférence à un niveau de température compris entre 1000°C et 1300°C. Ce flux (21) est détendu dans une turbine (TD3) associée au compresseur (C3), à un niveau de pression très proche du niveau de pression de l'air de combustion (3) introduit dans le réacteur- échangeur (R1). (TD3) associée au compresseur (C3), à un niveau de pression très proche du niveau de pression de l'air de combustion (3) introduit dans le réacteur- échangeur (R1).
L'effluent détendu (11) est introduit dans le réacteur- échangeur (R1). Compte tenu de la combustion au moyen du débit d'hydrogène (20) introduit dans la chambre de combustion (CC2), le dit effluent (11) se trouve alors à une température voisine de la température de l'effluent de combustion, ce qui représente un facteur favorable du point de vue de la combustion à l'hydrogène à l'intérieur du réacteur- échangeur (R1).
Dans la seconde variante, de la figure 3, le circuit de l'effluent de combustion est le même que dans la variante de la figure 2. Par contre, un circuit différent de l'air de combustion (15) nécessaire à la combustion de l'hydrogène (20) dans la chambre de combustion (CC2), permet de réduire la taille du compresseur (C3). L'air comprimé (15) issu du compresseur (C1) à un niveau de pression d'environ 1,5 à 2,5 MPa, est introduit au moins en partie directement dans la chambre de combustion (CC2).
L'autre partie de l'air comprimé (22) est introduite dans une chambre de combustion (CC4) dans laquelle s'effectue la combustion d'un flux d'hydrogène (23) produisant un effluent de combustion (24) qui est détendu dans la turbine (TD12) associée au compresseur (C1) et à l'alternateur (AT12).
L'effluent détendu (2) issu de la turbine (TD12) est à un niveau de pression d'environ 0,3 à 0,4 MPa et de préférence à une température d'environ 600-700°C. Il est introduit en partie dans le réacteur-échangeur (R1) via la ligne (3), et en partie dans la chambre de combustion (CC1) via la ligne (4) et l'organe déprimogène (V1) en suivant le même schéma que celui décrit dans le cas de base.
L'effluent (13) issu de la chambre de post combustion (CC1) est détendu dans une turbine (TD2) qui, contrairement au schéma de base et à la première variante, n'entraîne plus le compresseur (C1) ou (C11), mais uniquement un alternateur (AT2) qui produit de l'énergie électrique. Cette variante permet de produire davantage d'énergie électrique que dans la première variante (figure 2) ou le cas de base (figures 1). Elle illustre les possibilités de moduler la coproduction d'énergie électrique.

### EXEMPLES

### Exemple 1:

Cet exemple est donné à titre d'illustration du procédé selon l'art antérieur et correspond au schéma de base représenté par la figure 1. La charge de vaporéformage est constituée à 90 % (molaire) de méthane, 8% molaire d'éthane, et 2% molaire de dioxyde de carbone. Le débit de charge est de 3500 kmoles/heure. La quantité d'eau introduite avec la charge de vaporéformage correspond à un rapport eau / carbone de 3. La charge de vaporéformage additionnée de la quantité d'eau constitue le flux (A). Le débit d'effluent de la réaction (B) est de 21490 kmoles/heure. Le catalyseur de vaporéformage est un catalyseur à base de nickel déposé sur alumine commercial KATALCO 23-4Q de Johnson Mattey.

Les conditions de la réaction sont les suivantes :
Température de sortie du catalyseur : 900°C
Pression : 2,5 MPa en entrée (1 MPa= 10 bar)

L'air (1) avec un débit de 70240 kmoles/heure est comprimé dans le compresseur (C1) à un niveau de pression de 2 MPa. L'air comprimé (3) est introduit dans le réacteur-échangeur (R1) à une température de 500°C. Ce débit d'air (3) est régulé de façon à maintenir une teneur en oxygène de 0,5% molaire dans l'effluent de combustion.

L'hydrogène de combustion (5) provenant de l'effluent (B) après passage dans les réacteurs de conversion du CO à haute et basse température, et d'une unité de capture de CO2 (non représentés sur le schéma de la figure 1), est introduit séparément dans le réacteur-échangeur (R1) avec un débit partiel de 3450 kilomoles/heure. L'effluent de combustion (11) est introduit séparément dans le réacteur- échangeur (R1) avec un débit de 31400 kilomoles/heure.

Le taux de recyclage du flux (6) vers le réacteur- échangeur (R1) est de 80%. Au niveau de l'échangeur (E1), l'approche en température est de 50°C.

La production brute d'hydrogène issu de l'effluent de vaporéformage après réaction de shift basse et haute température et séparation du CO2, est de: 12830 kilomoles/heure, soit 287 536 Nm3/heure. La production nette d'hydrogène c'est à dire la production brute d'hydrogène diminuée des deux consommations d'hydrogène côté fumées (flux (5) et flux (19)) est de 2780 kilomoles/heure, soit 62 310 Nm3/heure.

La puissance électrique générée par l'alternateur (AT1) est de 92,2 MW. Il s'agit de la puissance délivrée par la turbine (TD1) diminuée de la puissance nécessaire au compresseur (C1). La puissance électrique générée par le cycle combiné (CB) est de 98,8 MW. La puissance électrique totale (CB) + (AT1) est donc de 191 MW électrique.

Le tableau 1 ci dessous donne le débit et la composition des différents flux constituant le circuit des effluents de combustion, ainsi que les niveaux de température et de pression. Les numéros de flux correspondent à ceux de la figure 1.

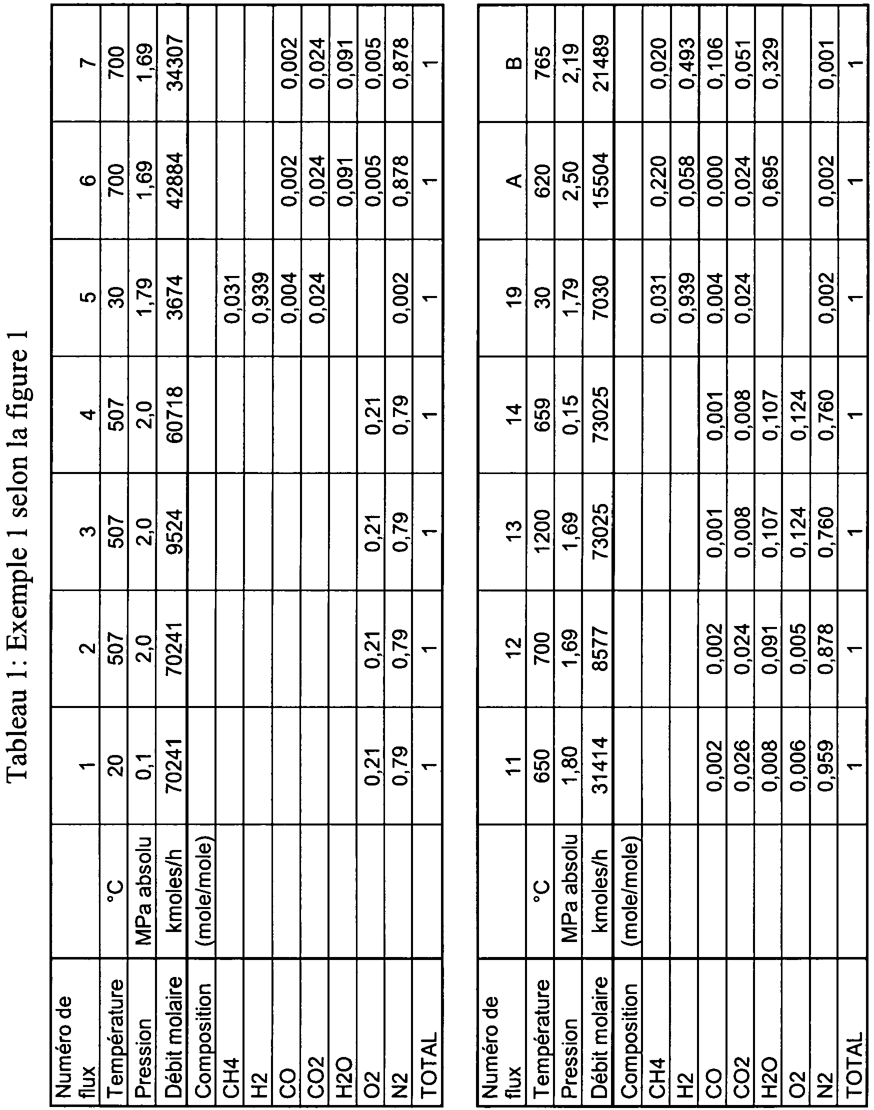

### Exemple 2 :

Ce second exemple correspond à la première variante représentée par la figure 2. Le débit de charge de vaporéformage est de 7450 kilomoles /heure. La quantité d'eau introduite avec la charge de vaporeformage correspond à un rapport eau / carbone de 3.

Les conditions de la réaction sont les suivantes :
Température de sortie du catalyseur : 900°C
Pression : 2,5 MPa en entrée (1 MPa = 10 bars)

L'air (1) avec un débit de 70240 kilomoles/heure est comprimé dans le compresseur (C1) à un niveau de pression de 0,5 MPa. Une partie de l'air comprimé (3) est introduit dans le réacteur (R1) à une température de 180°C. Ce débit d'air (3) est régulé de façon à maintenir une teneur en oxygène de 0,3% molaire dans l'effluent de combustion (6).

L'hydrogène de combustion (5) provenant de l'effluent (B) après passage dans les réacteurs de conversion du CO haute et basse température, et d'une unité de capture de CO2 (non représentés sur le schéma de la figure 2), est introduit séparément dans le réacteur (R1) avec un débit partiel de 2460 kilomoles/heure.

Une autre partie de l'air comprimé (15) est comprimé avec l'azote de dilution (10) dans le compresseur (C3) jusqu'à un niveau de pression de 2 MPa pour l'effluent (17). Son débit est régulé de façon à maintenir une teneur en oxygène de 0,3% molaire dans l'effluent de combustion (21) de la chambre de combustion (CC2).

L'hydrogène de combustion (20) provenant de l'effluent (B) après passage dans les réacteurs de conversion du CO à haute et basse température, et d'une unité de capture de CO2 (non représentés sur le schéma de la figure 2), est introduit séparément dans la chambre de combustion (CC2) avec un débit partiel de 16 030 kilomoles/heure. L'effluent de combustion (21), détendu dans la turbine (TD3), est introduit par le flux (11) séparément dans le réacteur (R1) avec un débit de 219 000 kilomoles/heure. Le taux de recyclage du flux (6) vers le réacteur de vaporeformage est de 80%. Au niveau de l'échangeur (E1), l'approche en température est de 35°C.

La production brute d'hydrogène issu de l'effluent de vaporéformage après réaction de conversion du CO à basse et haute température et séparation du CO2, est de: 27 300 kilomoles/heure, soit 612 060 Nm3/heure. La production nette d'hydrogène c'est à dire la production brute d'hydrogène diminuée des deux consommations d'hydrogène côté fumées (flux (5) et flux (19)) est de 2770 kilomoles/heure, soit 62 070 Nm3/heure.

La puissance électrique générée par l'alternateur (AT3) est de 249 MW. Il s'agit de la puissance délivrée par la turbine (TD3) diminuée de la puissance nécessaire au compresseur(C3). La puissance électrique générée par l'alternateur (AT11) est de 76 MW. Il s'agit de la puissance délivrée par la turbine (TD11) diminuée de la puissance nécessaire au compresseur(C11). La puissance électrique générée par le cycle combiné (CB) est de 152 MW. La puissance électrique totale générée par (CB), (AT11) et (AT3) est donc de 477 MW électrique.

Le tableau 2 ci-dessous donne le débit et la composition des différents flux constituant le circuit des effluents de combustion, ainsi que les niveaux de température et de pression. Les numéros de flux correspondent à ceux de la figure 2.

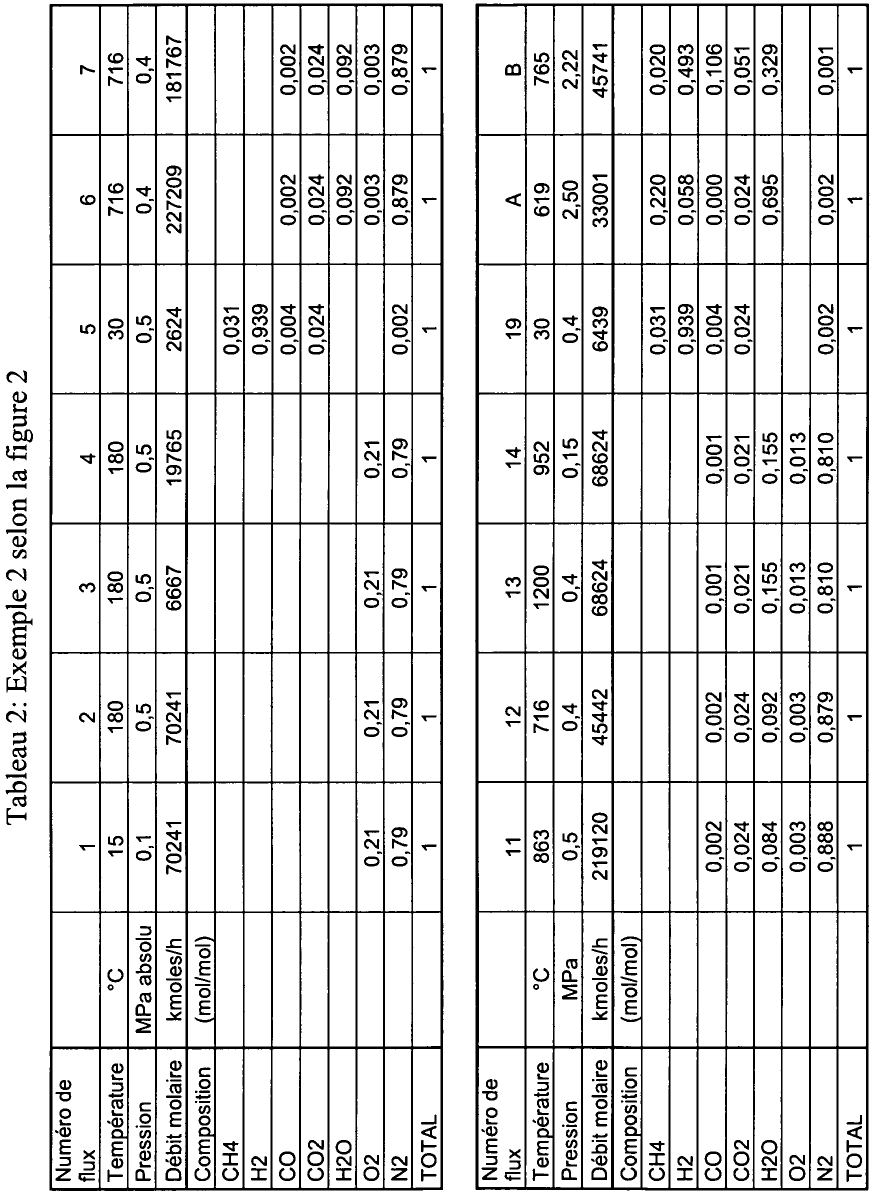

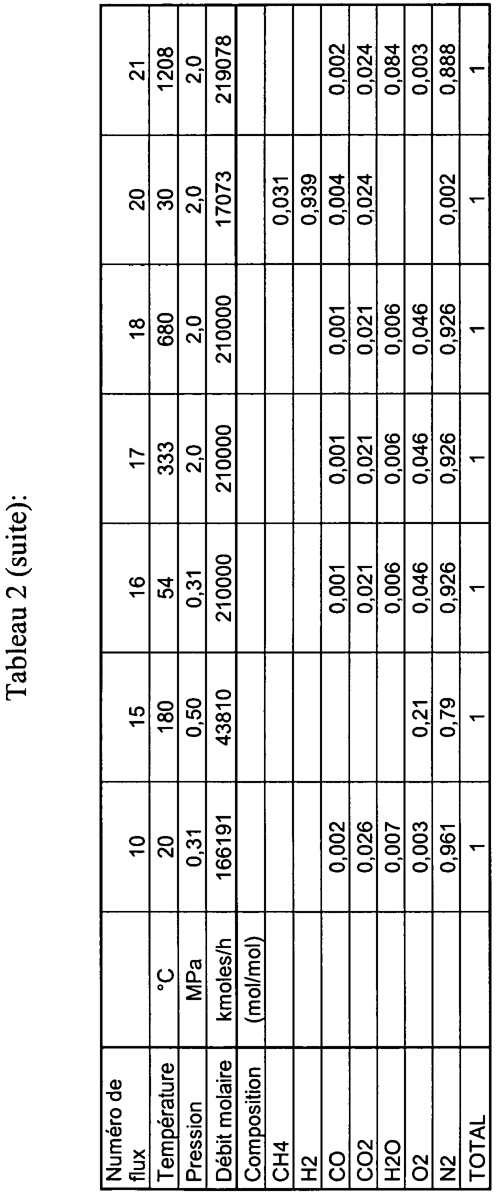

## Revendications

1. Procédé de production de gaz de synthèse par vaporéformage d'une charge hydrocarbure (A) dans un réacteur de vaporeformage (R1), et de coproduction d'énergie électrique, dans lequel l'apport de calories nécessité par la réaction de vaporéformage est obtenu par une combustion à l'hydrogène (5) dilué par une partie des effluents de combustion (11), ladite combustion étant réalisée à l'intérieur du réacteur- échangeur (R1), l'air nécessaire à la dite combustion (1) étant comprimé à une pression comprise entre 0,3 et 0,8 MPa au moyen du compresseur (C11) avant d'être introduit par la ligne (3) dans le réacteur échangeur (R1), et l'effluent (6) résultant de ladite combustion étant
- pour une partie (7), la partie (7) devenant (11) et constituant le circuit de dilution, recyclée à l'entrée dudit réacteur- échangeur (R1) de manière à diluer l'hydrogène (5) et à limiter la teneur en oxygène dans le réacteur-échangeur (R1) à une valeur inférieure à 10 % molaire,
- pour une autre partie (12) étant introduite dans une chambre de post combustion (CC1), le flux résultant (13) de la combustion à l'hydrogène (19) dans la chambre de postcombustion (CC1) étant détendu dans une turbine (TD1) qui fournit en partie l'énergie nécessaire au compresseur (C11), et qui entraîne par ailleurs un alternateur (AT11) assurant la coproduction d'énergie électrique, le procédé **caractérisé en ce que** la partie (7) de l'effluent de combustion (6) est refroidie dans un premier échangeur (E1) utilisant comme fluide refroidissement l'effluent de compression (17) issu d'un compresseur (C3), puis est refroidie dans un second échangeur (E2) utilisant un fluide de refroidissement extérieur au procédé, puis dans un aeroréfrigérant (AE1), le flux (9) sortant de l'aéroréfrigérant (AE1) étant introduit dans un ballon de séparation (D1) duquel on sort un flux (10) ne contenant presque plus d'eau qui est recomprimé dans le compresseur (C3) à un niveau de pression supérieur à la pression du réacteur- échangeur (R1), devenant le flux (17), ledit flux (17) étant réchauffé dans l'échangeur (E1) et introduit dans une chambre de postcombustion (CC2) utilisant de l'hydrogène (20) comme combustible, dans laquelle le flux (17) est porté à une température comprise entre 1000°C et 1300°C, puis détendu dans la turbine de détente (TD3) reliée au compresseur (C3) jusqu'à un niveau de pression très proche du niveau de pression de l'air de combustion (3) avant d'être réintroduit par le flux (11) dans ledit réacteur-échangeur (R1) à une température aussi proche que possible de celle de l'effluent de combustion (6), l'écart entre les températures d'introduction du flux (11) et de sortie des effluents de combustion (6) étant inférieur à 5°C.

2. Procédé de production de gaz de synthèse selon la revendication 1, dans lequel la proportion de l'effluent de combustion recyclé (7), devenant (11) au terme du circuit de dilution, en amont du réacteur- échangeur (R1) représente entre 20% et 90% molaire de l'effluent de combustion (6).

3. Procédé de production de gaz de synthèse selon l'une quelconque des revendications 1 à 2, dans lequel, lorsque l'effluent de combustion recyclé (11) est introduit dans le réacteur-échangeur (R1) séparément, le flux recyclé (7), devenant (11) au terme du circuit de dilution, représente entre 30% et 60 % molaire de l'effluent de combustion (6).

## Patentansprüche

1. Verfahren zur Herstellung von Synthesegas durch Dampfreformierung einer Kohlenwasserstoffbeschickung (A) in einem Dampfreformierungsreaktor (R1) und zur gemeinsamen Herstellung von elektrischer Energie, wobei die Zufuhr an Kalorien, die für die Reaktion der Dampfreformierung notwendig ist, durch Verbrennung von Wasserstoff (5) erhalten wird, der mit einem Teil der Verbrennungsprodukte (11) verdünnt wird, wobei die Verbrennung im Inneren des Wärmetauscher-Reaktors (R1) durchgeführt wird, wobei die Luft, die für die Verbrennung (1) notwendig ist, mit Hilfe des Kompressors (C11) auf einen Druck zwischen 0,3 und 0,8 MPa komprimiert wird, bevor sie durch die Leitung (3) in den Wärmetauscher-Reaktor (R1) eingeführt wird, und wobei der Abstrom (6), der aus der Verbrennung resultiert,
- für einen Teil (7) der Teil (7) ist, der sich entwickelt (11) und den Verdünnungskreislauf bildet, der am Wärmetauscher-Reaktor (R1) derart recycelt wird, um den Wasserstoff (5) zu verdünnen und den Sauerstoffgehalt in dem Wärmetauscher-Reaktor (R1) auf einen Wert von weniger als 10Mol-% zu begrenzen,
- für einen anderen Teil (12), der in eine Nachbrennkammer (CC1) eingeführt wird, der bei der Verbrennung von Wasserstoff (19) in der Nachbrennkammer (CC1) resultierende Fluss (13) ist, der in einer Turbine (TD1) entspannt wird, die teilweise die Energie bereitstellt, die für den Kompressor (C11) notwendig ist, und der übrigens einen Wechselstromgenerator (AT11) antreibt, der die gemeinsame Herstellung von elektrischer Energie gewährleistet,
wobei das Verfahren **dadurch gekennzeichnet ist, dass** der Teil (7) des Abgases aus der Verbrennung (6) in einem ersten Wärmetauscher (E1) gekühlt wird, der als Kühlflüssigkeit den Abstrom der Kompression (17), der aus einem Kompressor (C3) hervorgeht, verwendet, und dann in einem zweiten Wärmetauscher (E2), der eine Kühlflüssigkeit verwendet, die nicht zu dem Verfahren gehört, und dann in einem Luftkühlsystem (AE1) gekühlt wird, wobei der Fluss (9), der aus dem Luftkühlsystem (AE1) austritt, in ein Trennungsvolumen (D1) eingeführt wird, aus dem ein Fluss (10) austritt, der fast kein Wasser mehr enthält, der in dem Kompressor (C3) auf ein Druckniveau rekomprimiert wird, das höher als der Druck des Wärmetauscher-Reaktors (R1) ist, der der Fluss (17) wird, wobei der Fluss (17) in dem Wärmetauscher (E1) erwärmt wird und in eine Nachbrennkammer (CC2) eingeführt wird, die Wasserstoff (20) als Brennstoff verwendet, in der der Fluss (17) auf eine Temperatur zwischen 1.000 °C und 1.300 °C gebracht wird und dann in der Entspannungsturbine (TD3), die mit dem Kompressor (C3) verbunden ist, bis auf ein Druckniveau entspannt wird, das dem Druckniveau der Verbrennungsluft (3) sehr nahe ist, bevor er durch den Fluss (11) bei einer Temperatur, die jener des Abgases aus der Verbrennung (6) so nahe wie möglich kommt, wieder in den Wärmetauscher-Reaktor (R1) eingeführt wird, wobei die Differenz zwischen der Temperatur des Einführens des Flusses (11) und der Temperatur des Austritts des Abstroms aus der Verbrennung (6) niedriger als 5 °C ist.

2. Verfahren zur Herstellung von Synthesegas nach Anspruch 1, wobei der Anteil des recycelten Abstroms aus der Verbrennung (7), das sich am Ende des Verdünnungskreislaufs vorgelagert vor dem Wärmetauscher-Reaktor (R1) bildet (11), zwischen 20 Mol-% und 90 Mol-% des Abstroms aus der Verbrennung (6) darstellt.

3. Verfahren zur Herstellung von Synthesegas nach einem der Ansprüche 1 bis 2, wobei, wenn der recycelte Abstrom aus der Verbrennung (11) in den Wärmetauscher-Reaktor (R1) getrennt eingeführt wird, der recycelte Fluss (7), der sich am Ende des Verdünnungskreislaufs bildet (11), zwischen 30 Mol-% und 60 Mol-% des Abstroms aus der Verbrennung (6) darstellt.

## Claims

1. A process for the production of synthesis gas by steam reforming of a hydrocarbon feed (A) in a steam reforming reactor (R1) and co-production of electrical energy, in which the supply of calories that is required by the steam reforming reaction is achieved by combustion with hydrogen (5) diluted by a portion of the combustion effluents (11), said combustion being carried out in the interior of the exchanger reactor (R1), the air necessary for said combustion (1) being compressed at a pressure of between 0.3 and 0.8 MPa by means of the compressor (C11) before being introduced by way of the line (3) into the exchanger reactor (R1), and the effluent (6) resulting from said combustion being
- for one portion (7) the portion (7) becoming (11) and forming the dilution circuit, that is recycled to the input of the exchanger reactor (R1) so as to dilute the hydrogen (5) and limit the oxygen content in the exchanger reactor (R1) to a value of less than 10 molar %, and
- for another portion (12) being introduced into a post-combustion chamber (CC1), the resulting flow (13) from combustion with hydrogen (19) in the post-combustion chamber (CC1) being expanded in a turbine (TD1) which provides in part the energy necessary for the compressor (C11) and which also drives an alternator (AT11) ensuring co-production of electrical energy,
the process being **characterised in that** the portion (7) of the combustion effluent (6) is cooled in a first exchanger (E1) using as the cooling fluid the compression fluid (17) issuing from a compressor (C3) and is then cooled in a second exchanger (E2) using a cooling fluid external to the process, then in an air refrigerating means (AE1) the flow (9) issuing from the air refrigerating means (AE1) being introduced into a separation vessel (D1) from which there issues a flow (10) containing almost no water which is recompressed in the compressor (C3) at a pressure level higher than the pressure of the exchanger reactor (R1), becoming the flow (17), said flow being reheated in the exchanger (E1) and introduced into a post-combustion chamber (CC2) using hydrogen (20) as the fuel, in which the flow (17) is raised to a temperature of between 1000°C and 1300°C, and then expanded in the expansion turbine (TD3) connected to the compressor (C3) to a pressure level very close to the pressure level of the combustion air (3) before being reintroduced by the flow (11) into said exchanger reactor (R1) at a temperature as close as possible to that of the combustion effluent (6), the difference between the temperatures at introduction of the flow (11) and discharge of the combustion effluents (6) being less than 5°C.

2. A synthesis gas production process according to claim 1 in which the proportion of the recycled combustion effluent (7) becoming (11) at the end of the dilution circuit upstream of the exchanger reactor (R1) represents between 20 molar % and 90 molar % of the combustion effluent (6).

3. A synthesis gas production process according to either one of claims 1 and 2 wherein when the recycled combustion effluent (11) is introduced into the exchanger reactor (R1) separately the recycled flow (7) becoming (11) at the end of the dilution circuit represents between 30 molar % and 60 molar % of the combustion effluent (6).
